Europäisches Patentamt

European Patent Office

Office européen des brevets

(19)

(11) Numéro de publication : **0 079 048 B1**

(12)

# FASCICULE DE BREVET EUROPÉEN

(45) Date de publication du fascicule du brevet :
28.05.86

(21) Numéro de dépôt : 82110155.7

(22) Date de dépôt : 04.11.82

(51) Int. Cl.⁴ : **G 21 C 13/02**, G 21 C 9/04, E 04 H 9/02

(54) **Local nucléaire avec chaudière et enceinte de confinement résistant aux séismes.**

(30) Priorité : 09.11.81 FR 8120910
10.09.82 FR 8215339

(43) Date de publication de la demande :
18.05.83 Bulletin 83/20

(45) Mention de la délivrance du brevet :
28.05.86 Bulletin 86/22

(84) Etats contractants désignés :
DE FR GB IT SE

(56) Documents cités :
DE-A- 1 916 161
FR-A- 1 172 996
FR-A- 2 221 953
FR-A- 2 316 412
FR-A- 2 434 461
GB-A- 889 758
US-A- 3 152 713
US-A- 3 795 139
COMBUSTION, vol. 44, no. 12, juin 1973, pages 17-24,
New York (USA); J.N.MULAY et al.: "Structural and
layout considerations for nuclear power plant in high
seismic area"
SCHWEISSEN UND SCHNEIDEN, vol. 20, no. 9, 1968,
pages 445-446, Düsseldorf (DE); E.F.OBERING:
"Herstellung des Sicherheitsbehälters für den Erzfrachter "Otto Hahn"

(73) Titulaire : ALSTHOM
38, avenue Kléber
F-75784 Paris Cédex 16 (FR)

(72) Inventeur : Bioret, Bernard
30, rue du Port Durand
F-44300 Nantes (FR)
Inventeur : Holub, Serge
7, rue du Petit Bois
F-44700 Orvault (FR)
Inventeur : Michaut, Joseph
18, rue du Rocher La Chabossière
F-44220 Coueron (FR)
Inventeur : Pierart, Robert
22, rue Paul Ramadier
F-44200 Nantes (FR)

(74) Mandataire : Weinmiller, Jürgen et al
Zeppelinstrasse 63
D-8000 München 80 (DE)

EP 0 079 048 B1

## Description

On connaît des chaudières nucléaires dites « compactes » du type PWR à eau légère de petite ou moyenne puissance (par exemple entre 200 et 2 000 MW thermiques), qui sont constituées autour d'une cuve de réacteur associée à des générateurs de vapeur par des tubulures de liaison aussi courtes que possible parcourues par le fluide caloporteur primaire. L'ensemble ainsi constitué doit être maintenu dans une structure de supportage très rigide telle que décrite par exemple dans le document de brevet FR-A-2 434 461. Cette structure permet de maintenir de telles chaudières nucléaires sans jeu dans une position fixe bien déterminée et sans créer en aucun point de contrainte anormale, ceci quelles que soient les dilatations et les déformations relatives des appareils constituant la chaudière ou la structure de supportage elle-même.

L'ensemble de la cuve de réacteur, des générateurs des vapeurs, de leurs protections biologiques et de la structure de supportage peut être appelé : « bloc de production de vapeur ».

On connaît aussi d'autres chaudières nucléaires de puissance comparable, également du type PWR à eau légère, qui sont dites « intégrées » parce que les générateurs de vapeur sont disposés dans la cuve du réacteur. Cette cuve constitue avec sa structure de supportage le bloc de production de vapeur.

Dans ces chaudières nucléaires compactes ou intégrées le bloc de production de vapeur se présente comme une colonne, de masse très élevée, de base réduite et de grande hauteur (4 fois le diamètre ou plus). Cette colonne est disposée dans une enceinte de confinement métallique et de forme sphérique ou cylindro-sphérique qui contient, outre le pressuriseur, un certain nombre d'équipements auxiliaires, de faible poids mais de grand volume, tout l'ensemble constituant la « chaudière ».

Le volume de l'enceinte doit donc être grand pour contenir ces équipements. Il doit d'autre part être grand pour limiter la surpression apparaissant en cas de perte accidentelle du réfrigérant primaire. Le volume de l'enceinte ne dépend donc pas directement des dimensions du bloc de production de vapeur.

La chaudière dans son enceinte est classiquement installée dans un local qui est au moins partiellement constituée de béton et qui a pour fonction d'assurer sa protection contre les impacts extérieurs (chutes d'avions). Ce local fait partie d'un bâtiment s'appuyant sur un radier et comportant d'autres locaux pour abriter des équipements divers. On appelle ici « local nucléaire » l'ensemble de la chaudière, de son enceinte de confinement et du local qui les contient.

Il est souhaitable de maintenir la chaudière et l'enceinte par rapport à la structure bétonnée du local nucléaire de telle sorte que son intégrité et si possible la continuité de son fonctionnement ne soient pas atteints par un éventuel séisme se traduisant par des déplacements horizontaux de cette structure. Ceci veut dire que les accélérations et les déplacements subis par chacun des composants de la chaudière ne dépassent pas les valeurs pour lesquelles ces composants ont été calculés. Un niveau d'accélération acceptable pourrait être obtenu en limitant les forces horizontales applicables par la structure à la chaudière pour donner à la chaudière et à l'enceinte de confinement la possibilité d'un déplacement d'ensemble horizontal pratiquement libre en cas de séisme. Mais une telle liberté de déplacement se traduirait par une position aléatoire de la chaudière en fin de séisme, avec un écart tel par rapport à la position initiale que cela rendrait difficile la continuation du fonctionnement de la centrale nucléaire.

Une telle liberté de déplacement étant donc exclue il apparaît nécessaire de munir le local nucléaire de moyens de maintien limitant les déplacements de la chaudière, par rapport à la structure bétonnée, à une fraction des déplacements susceptibles d'être imposés à cette structure par un séisme. Malheureusement la présence de tels moyens aboutit, s'ils sont de type habituel, à appliquer à la chaudière des accélérations qui sont non pas égales à celles imposées à la structure bétonnés, mais fortement supérieures. En effet, lors d'un séisme, les mouvements aléatoires du sol (surtout oscillatoires), et les accélérations correspondantes sont modifiés et généralement amplifiés par l'ensemble des bâtiments et structures reposant sur le sol, du fait de leur rigidité imparfaite qui se traduit par des déformations élastiques.

C'est en particulier le cas du local nucléaire : sa structure bétonnée crée une première amplification de l'accélération qui, transmise à la chaudière nucléaire est amplifiée une deuxième fois par la structure métallique de cette dernière de telle sorte que les composants de la chaudière nucléaire sont soumis à une accélération déduite de celle du sol par deux amplifications successives. Les facteurs d'amplification dépendent des fréquences considérées. La première amplification peut dépasser un facteur 4 dans le cas de certaines structures bétonnées pour les fréquences comprises entre 2 et 20 Hz. Quant à la deuxième amplification elle peut également dépasser un facteur 4 dans le cas de certaines structures métalliques pour les fréquences comprises entre 2 et 20 Hz.

Le problème de la réalisation des moyens de maintien est encore compliqué par les dilatations thermiques différentes subies en service normal par la chaudière, l'enceinte et les diverses structures. De plus l'enceinte de confinement subit, en cas de fuite accidentelle de réfrigérant une dilatation due aux augmentations de la pression et de la température intérieures et c'est alors qu'elle doit résister aux efforts les plus importants. Le problème est donc de disposer la chaudière et

l'enceinte de confinement dans la structure bétonnée de manière à assurer tant l'intégrité ou la non perturbation de la chaudière en cas de séisme que l'intégrité de l'enceinte en cas de fuite du réfrigérant primaire. Il faut enfin remarquer que les efforts et les énergies susceptibles d'être appliquées à la chaudière lors d'un séisme sont très importants, par exemple 9 000 t et $10^9$ J dans le cas d'une chaudière de 4 500 T soumise à une sucession de 100 oscillations d'amplitude 10 cm et de fréquence 3 à 15 Hz.

Une solution antérieurement proposée par les inventeurs pour résoudre ce problème consiste à réaliser la base du bloc de production de vapeur de telle façon qu'elle puisse être ancrée au radier de la structure bétonnée d'une façon suffisamment rigide pour minimiser les déplacements relatifs. L'enceinte de confinement est alors rattachée à ce radier d'une manière permettant sa dilatation.

Le radier de la structure bétonnée doit alors avoir une épaisseur suffisante pour lui permettre de résister aux efforts qu'il subit en cas de séisme. Lorsque la puissance de la centrale n'est pas petite cette épaisseur est grande en raison de la masse du bloc de production de vapeur qui se chiffre en milliers de tonnes et de sa hauteur qui se chiffre en dizaines de mètres. Le moment fléchissant appliqué à ce radier est en effet proportionnel au produit de la masse de ce bloc par la hauteur de son centre de gravité et les forces d'ancrage dans ce radier sont proportionnelles à ce moment et inversement proportionnelle aux dimensions transversales de la base. Le coût du radier augmente alors de manière gênante le coût total de la chaudière nucléaire installée.

Par ailleurs, toujours en raison de cette masse et de cette hauteur, le coût et le poids de la structure de supportage de la chaudière est élevé, car cette structure doit présenter à partir de sa base une rigidité suffisante pour éviter qu'en cas de séisme elle ne fléchisse de façon gênante, le moment fléchissant appliqué à la base de la structure étant évidemment le même que celui qui est appliqué au radier.

La présente invention a pour but la réalisation d'un local nucléaire permettant d'éviter des accélérations excessives à une chaudière nucléaire en cas de séisme, ceci sans élever exagérément le coût de construction du radier bétonné du local ni celui de la structure métallique disposée sur ce radier pour assurer le supportage de la chaudière, et sans gêner les dilatations de l'enceinte de confinement entourant cette chaudière, ni celles de la chaudière elle-même.

Elle a pour objet un local nucléaire avec chaudière et enceinte de confinement résistant aux séismes, ce local comportant

une structure bétonnée avec un radier sensiblement horizontal prenant appui dans le sol et avec des murs latéraux s'élevant sensiblement verticalement à partir de ce radier,

une enceinte de confinement métallique à parois minces et à axe vertical, cette enceinte étant disposée entre ces murs latéraux et posée sur ce radier par une base dont l'aire est inférieure à 25 % de la section maximale de l'enceinte par un plan horizontal,

une chaudière nucléaire comprenant un bloc de production de vapeur et des équipements auxiliaires, contenue dans cette enceinte de confinement, s'appuyant sur le radier par l'intermédiaire de ladite base, et présentant un centre de gravité situé, à partir du radier, à une hauteur supérieure au diamètre de la base,

et des moyens de maintien pour limiter les oscillations de cette enceinte et de cette chaudière par rapport à la structure bétonnée, tout en permettant les dilatations éventuelles de l'enceinte et de la chaudière.

Ce local est caractérisé par le fait que ces moyens de maintien comportent

un plancher métallique annulaire intérieur à l'enceinte de confinement, entourant le bloc de production de vapeur auquel il est fixé à distance de la base, et renforcé par des raidisseurs internes s'étendant radialement et répartis angulairement autour de l'axe de l'enceinte,

au moins un vérin hydraulique interne agissant radialement entre d'une part l'extrémité extérieure de chacun de ces raidisseurs internes et d'autres part la face interne de l'enceinte de confinement par l'intermédiaire d'un bloc d'appui interne,

au moins un vérin hydraulique externe étant antagoniste du ou des vérins internes et agissant radialement entre d'une part lesdits murs latéraux et d'autre part la face externe de l'enceinte de confinement par l'intermédiaire d'un bloc d'appui externe en regard du bloc d'appui interne du vérin antagoniste,

des accumulateurs de pression pour appliquer de manière permanente à chacun de ces vérins une pression d'un fluide de travail tendant à le faire avancer pour l'appliquer contre la paroi de l'enceinte de confinement,

et une valve unidirectionnelle avec dérivation disposée entre ces accumulateurs de pression et chaque vérin et limitant le débit du fluide de travail seulement en sortie de ce vérin pour limiter la vitesse de recul du vérin lorsqu'une force de compression lui est appliquée pendant une phase d'un séisme tout en permettant à ce vérin pendant d'autres phases du séisme tout en permettant à ce vérin pendant d'autres phases du séisme d'avancer sans résistance ni dissipation d'énergie sensibles et à une vitesse suffisamment « rapide » pour qu'il reste en appui ininterrompu contre la paroi de l'enceinte de confinement quels que soient les déplacements de l'enceinte et de la chaudière et les déformations des planchers, la valve unidirectionnelle de chaque vérin interne limitant la vitesse de recul de ce vérin à une vitesse « lente » qui est suffisamment petite pour éviter toute dissipation sensible d'énergie dans ces vérins et tout déplacement relatif important de la chaudière par rapport à l'enceinte pendant un séisme, cette vitesse lente étant cependant supérieure à celle des déplacements relatifs lents résultant des dilatations et contractions de l'enceinte, de la chaudière et des planchers, de manière à permettre à ces déplacements lents de se faire librement.

La valve unidirectionnelle des vérins externes peut être identique à celle des vérins internes. Mais il n'en est pas ainsi lorsque la rigidité de la structure bétonnée n'est pas très grande et lorsque les séismes à envisager sont importants. Dans ce cas fréquent le local nucléaire selon l'invention est en outre caractérisé par le fait que la valve unidirectionnelle de chaque vérin externe limite la vitesse de recul de ce vérin à une vitesse « intermédiaire » entre lesdites vitesses lente et rapide, en opposant une résistance sensible à ce recul pendant un séisme et en transformant en chaleur l'énergie mécanique qui lui est fournie par les forces de compression qu'il subit, de manière à amortir les oscillations de la chaudière. Chaque vérin externe comporte alors des moyens de dissipation thermique propres à absorber la chaleur créée dans ce vérin pendant un séisme, sans dépasser une température maximale admissible. De plus la base de la chaudière et de l'enceinte repose sur le radier par l'intermédiaire de patins permettant un déplacement horizontal reversible de cette base, des moyens de rappel élastique agissant sur cette base pour ramener la chaudière et l'enceinte à leur position initiale après un déplacement, sans exercer d'efforts importants sur l'enceinte.

A titre d'exemple, ladite vitesse lente peut être de l'ordre de $10^{-4}$ m/s, ladite vitesse intermédiaire de l'ordre de 1 m/s, et ladite vitesse rapide supérieure à 2 m/s.

Un tel ordre de grandeur de vitesse intermédiaire représente un compromis acceptable pour la réduction des déplacements relatifs entre la chaudière et la structure bétonnée, ainsi que pour celle des accélérations absolues appliquées à la chaudière.

Plus généralement, compte-tenu de la diversité des situations susceptibles d'être rencontrées lors de la mise en œuvre de l'invention, il semble que la vitesse lente doive être inférieure à $2.10^{-4}$ m/s, et la vitesse intermédiaire largement supérieure à 100 fois la vitesse lente, tout en restant inférieure à 1,5 m/s.

On peut remarquer que, dans le but de maintenir une chaudière nucléaire dans un bateau, on a déjà proposé des dispositifs de maintien latéral d'enceintes de confinement de réacteurs nucléaires dans lesquels les efforts sont transmis à des tirants horizontaux extérieurs par l'intermédiaire de quatre pièces de liaison solidaires à la fois des structures intérieures à l'enceinte et de l'enceinte elle-même. Ces tirants forment un cadre carré autour de l'enceinte et sont ancrés à leurs extrémités.

Ces dispositifs peuvent être utilisés dans des bateaux, tels que l'« Otto Hahn » (Kernenergie-Forschungsschiff N.S. Otto Hahn), qui ne sont pas destinés à recevoir de nombreux chocs. Mais ils présentent les inconvénients de concentrer les efforts sur l'enceinte au voisinage des pièces de liaison et, du fait de l'élasticité des tirants, d'autoriser des déplacements, certes limités, mais qui peuvent créer des accélérations préjudiciables à la tenue de l'enceinte.

Dans le cas des chaudières terrestre auxquelles est destinée la présente invention et qui sont soumises au risque de séismes se traduisant par une succession de nombreuses sollicitations alternées, de tels dispositifs sont donc manifestement inapplicables en raison des efforts concentrés qu'ils appliqueraient sur une enceinte de confinement à parois minces et de l'importance des déplacements qui résulteraient de l'élasticité des tirants horizontaux extérieurs.

A l'aide des figures schématiques ci-jointes on va décrire ci-après, à titre non limitatif, comment l'invention peut être mise en œuvre.

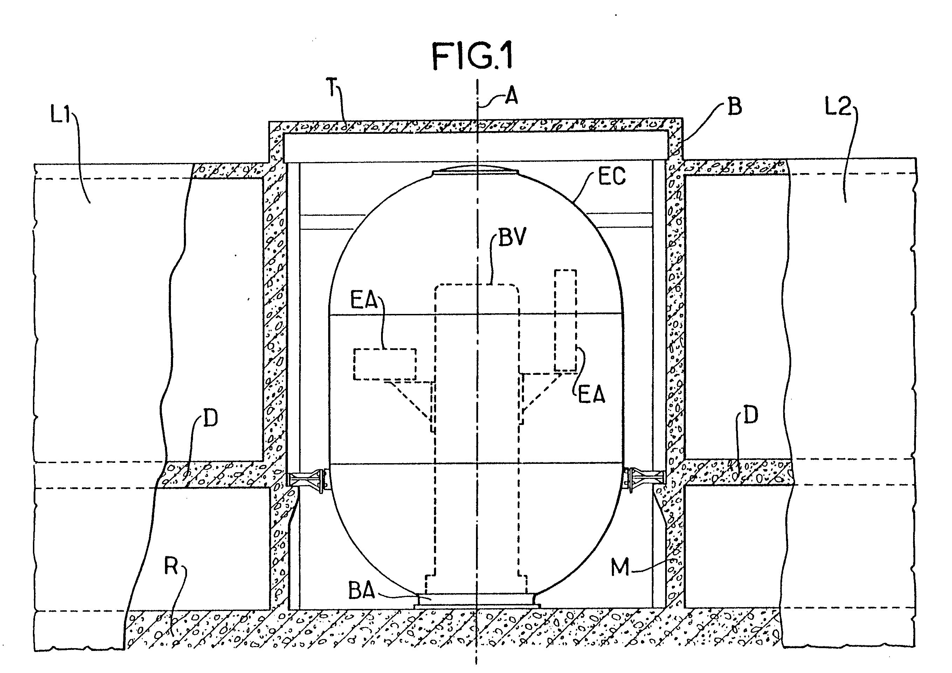

La figure 1 représente une vue d'ensemble en élévation d'un premier local nucléaire selon l'invention.

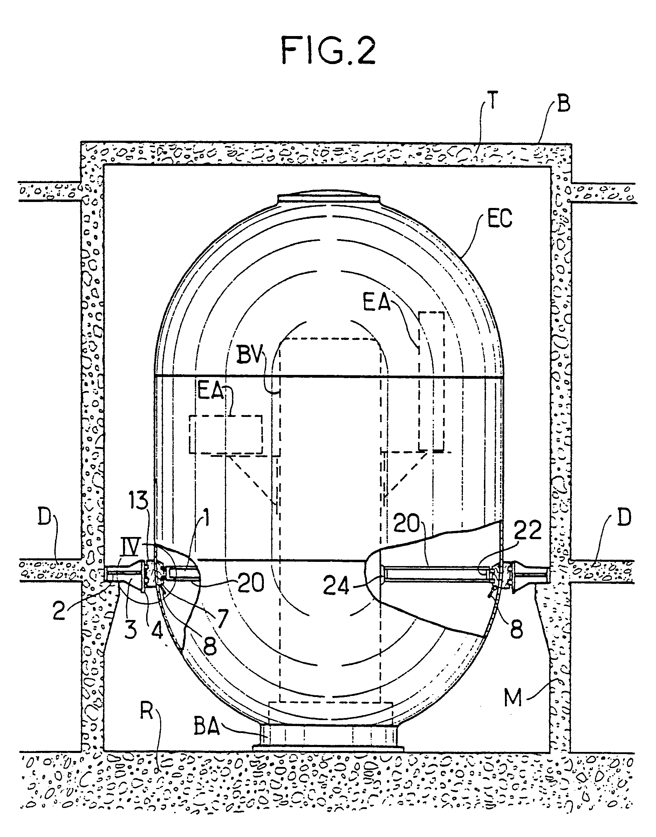

La figure 2 représente une partie agrandie de la figure 1 avec arrachement partiel de l'enceinte de confinement.

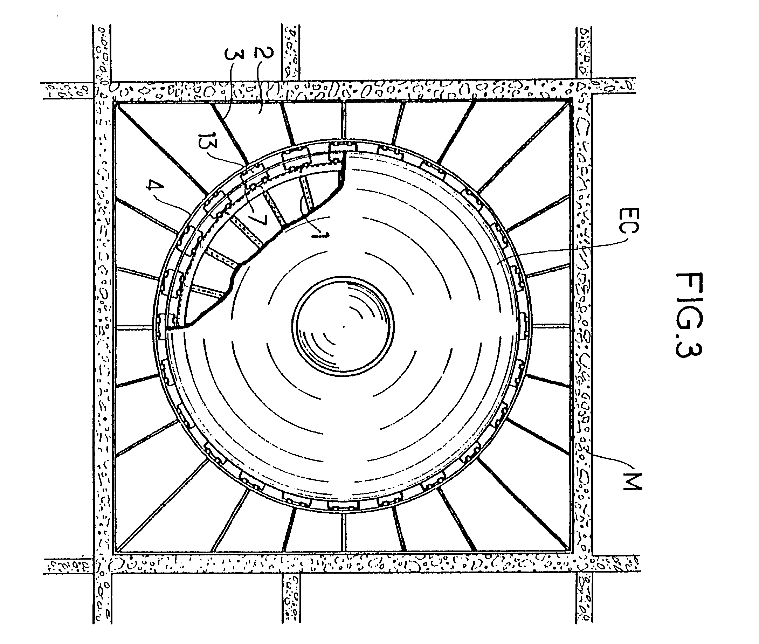

La figure 3 représente une vue de dessus de ce même local.

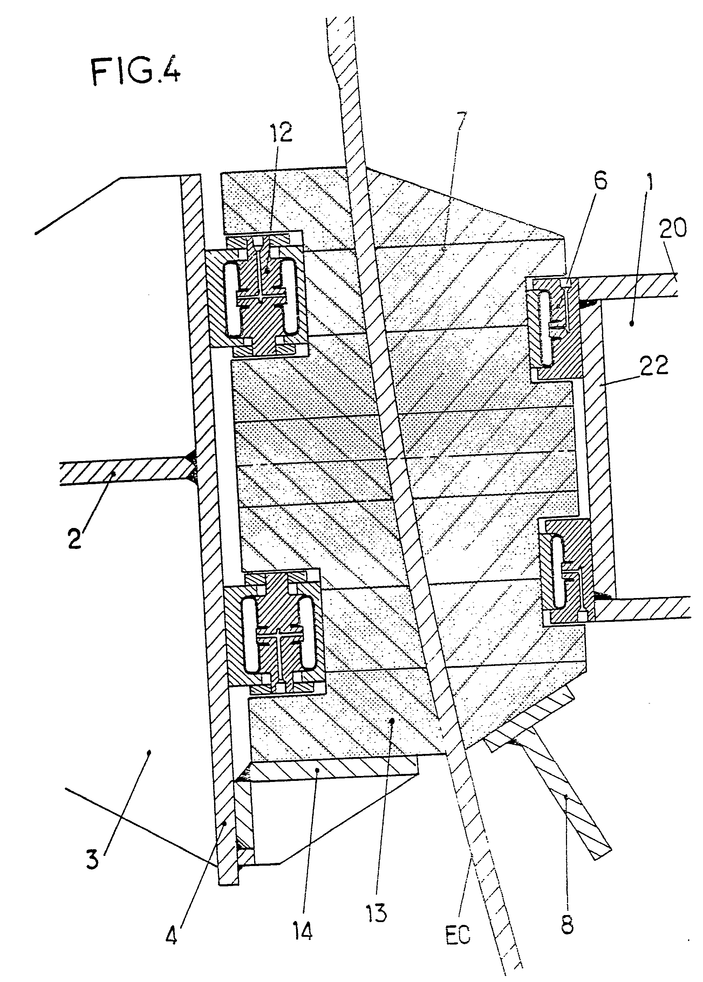

La figure 4 représente une vue de ce local en coupe verticale sur deux blocs d'appui de part et d'autre de l'enceinte de confinement.

La figure 5 représente une vue très schématique du système d'alimentation d'un vérin hydraulique de ce local.

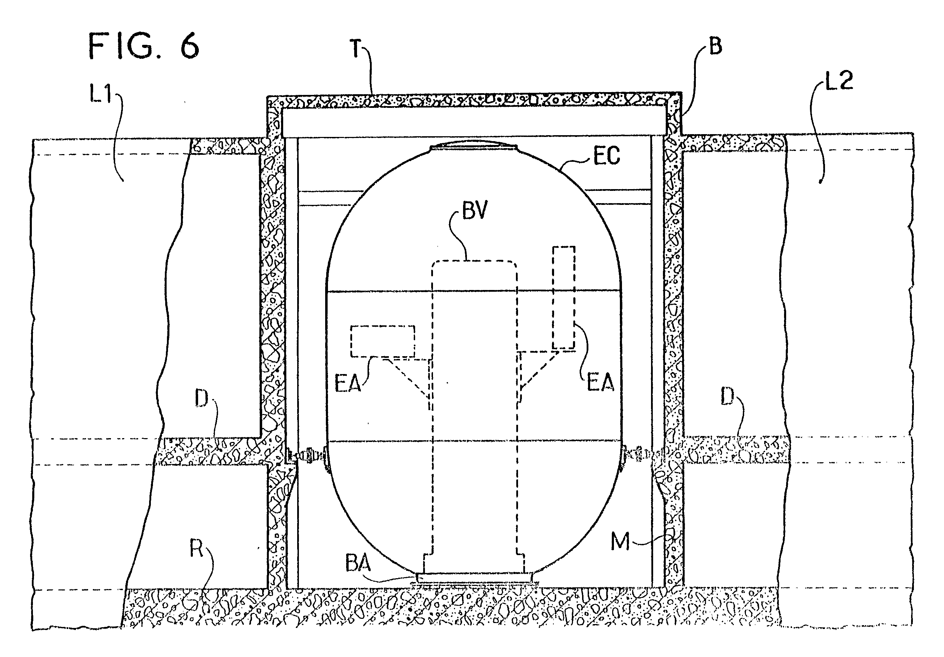

La figure 6 représente une vue d'ensemble en élévation d'un deuxième local nucléaire selon l'invention.

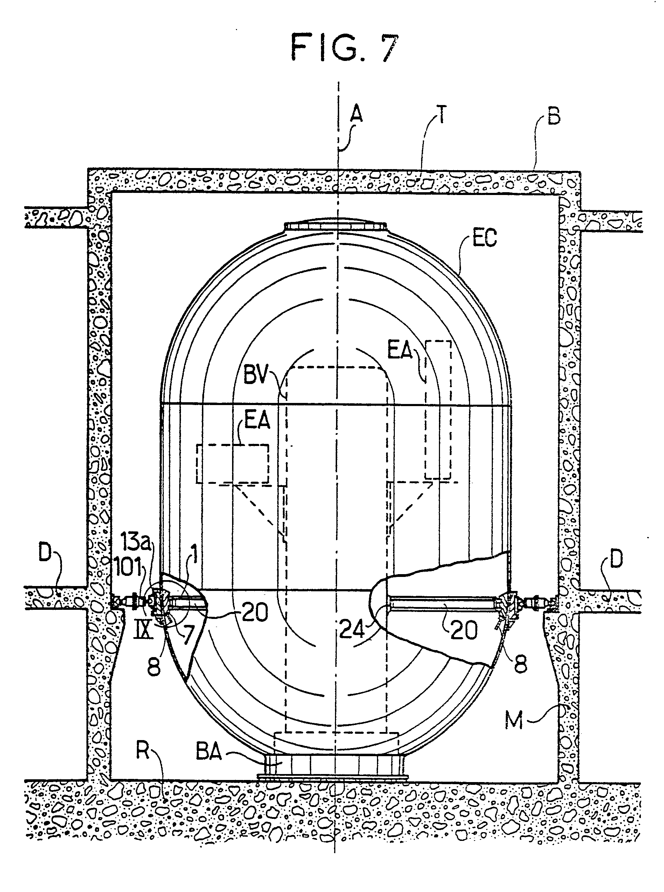

La figure 7 représente une partie agrandie de la figure 6 avec arrachement partiel de l'enceinte de confinement.

La figure 8 représente une vue de dessus de ce même local.

La figure 9 représente une vue en coupe verticale sur deux blocs d'appui de part et d'autre de l'enceinte de confinement de ce deuxième local.

La figure 10 représente une vue en coupe verticale d'un amortisseur hydraulique externe de ce deuxième local dont les vérins internes sont constitués et alimentés comme ceux du premier local.

Les figures 11 et 12 représentent des vues de la base de l'enceinte de confinement de ce deuxième local, respectivement en élévation avec arrachement partiel, et en coupe par un plan horizontal XII-XII de la figure 11.

La figure 13 représente une vue à l'échelle agrandie, en coupe par un plan axial, d'un détail XIII de la figure 11.

Chacun des locaux nucléaires décrits à titre d'exemple est intégré dans un bâtiment en béton B constituant notamment par sa toiture T, une protection contre les impacts accidentels d'origine extérieure tel que des chutes d'avions. Ce bâtiment s'élève sur un radier R constitué de béton armé de même que le reste du bâtiment et épais par exemple de 2 m. Ce bâtiment forme plusieurs locaux L1, L2 et comporte notamment des murs verticaux M délimitant un local nucléaire principal de forme carrée, et autour de ce local des dalles horizontales D constituant des planchers pour les autres locaux et contribuant à la résistance des murs M aux efforts horizontaux.

Dans ce local est placée une chaudière nucléaire dont le bloc de production de vapeur est représenté en BV et présente la forme d'une colonne cylindrique verticale métallique s'appuyant par une base BA sur le radier R et disposée dans l'axe du local. A cette colonne, sont fixés des équipements auxiliaires EA. Cette base présente par exemple un diamètre de 8,5 m tandis que l'ensemble bloc BV et équipements EA pèse 4 200 t et a son centre de gravité à 12,5 m au-dessus du radier R, à peu près au niveau des dalles D.

Le bloc BV et des équipements auxiliaires de faible poids EA sont disposés dans une enceinte de confinement coaxiale EC en acier qui se raccorde de manière étanche à la base BA et est supportée par cette base. Cette enceinte présente une forme cylindro-sphérique constituée de deux demies sphères séparées par une virole cylindrique de même diamètre par exemple 20 m. Elle est constituée de tôle épaisse de 3 cm dans la partie sphérique et de 6 cm dans la partie cylindrique. Elle est dite mince parce qu'elle n'est pas conçues pour supporter des efforts de flexion, autre que ceux, relativement faibles, qui résultent de son propre poids. Elle doit par contre pouvoir supporter une surpression gazeuse interne, et pouvoir se dilater librement.

Quoiqu'un ancrage de la base BA dans le radier R puisse être utile dans le cas du premier local nucléaire décrit ici, il n'est pas prévu, d'utiliser un tel ancrage pour assurer le maintien de l'enceinte EC et du bloc de production de vapeur BV en cas d'un séisme.

Les moyens de maintien utilisés comprennent à l'intérieur de l'enceinte de confinement EC, un plancher métallique double 20 constituant une poutre circulaire horizontale avec des raidisseurs internes rayonnants 1 régulièrement répartis angulairement et solidaires de l'ensemble des structures installées à l'intérieur de l'enceinte de confinement. Ce plancher est disposé sensiblement à la hauteur du centre de gravité du bloc de production de vapeur BV. L'extrémité de chaque raidisseur porte quatre vérins hydrauliques 6 s'appuyant d'un côté sur cette extrémité et de l'autre sur un bloc d'appui 7 fait de bois ou de tout autre matériau moins dur que l'acier, appliquée sur une portion de la surface intérieure de l'enceinte. Ce bloc de bois repose sur un support métallique 8. Le nombre de ces blocs est un multiple de 4, par exemple 24 dans le cas du premier local nucléaire décrit.

Le plancher interne 20 est limitée extérieurement par une virole 22 constituant une semelle circulaire et intérieurement par une autre virole 24 entourant le bloc BV.

Les vérins 6 sont reliés à des accumulateurs 9 par un système de conduits 15 comportant pour chaque vérin, deux diaphragmes 10 et une bille 11 formant clapet de valve unidirectionnelle. Le fonctionnement de ce système est explicité plus loin. A l'extérieur de l'enceinte de confinement, on prévoit un plancher externe qui est métallique dans le cas du premier local nucléaire, seul décrit ci-après jusqu'à indication contraire. Ce plancher externe est constitué d'une tôle horizontale 2 entourant l'enceinte EC, et muni de raidisseurs radiaux 3 disposés dans le prolongement des raidisseurs 1.

L'extrémité des raidisseurs et le pourtour de la tôle 2 les plus proches de l'enceinte sont solidaires d'une virole métallique circulaire verticale 4 de même axe de révolution que l'enceinte.

Dans l'espace annulaire ainsi ménagé entre cette virole et l'enceinte, au droit de chaque raidisseur, sont disposés quatre vérins hydrauliques 12, simples ou doubles suivant l'importance des déplacements, s'appuyant d'un côté sur la virole 4 et de l'autre sur une pièce d'appui 13. Cette dernière est analogue à la pièce 7 et appliquée sur la portion de la surface extérieure de l'enceinte exactement en vis-à-vis de celle sur laquelle s'applique la pièce de bois 7. Elle repose sur un support métallique 14.

Le pourtour extérieur du plancher raidi 2 de forme carrée, s'appuie par l'intermédiaire de plots métalliques sur les murs en béton M du bâtiment B entourant l'enceinte.

Les vérins 12 sont reliés à des accumulateurs par un système de conduits comportant deux diaphragmes et une bille formant clapet de valve unidirectionnelle, ces éléments étant identiques à ceux représentés en 9, 10 et 11.

Le contact permanent entre les pièces de bois 7 et 13 et la paroi de l'enceinte de confinement EC est assuré grâce à une faible pression maintenue dans les vérins.

Les variations de pression à l'intérieur de l'enceinte d'une part et les dilatations thermique différentielles des raidisseurs de la paroi de l'enceinte EC et du plancher raidi 2 d'autre part, engendrent des déplacements relatifs de ces différents éléments. Ces déplacements étant lents, la vitesse de transfert du fluide au travers des diaphragmes crée une perte de charge trop faible pour s'opposer au mouvement.

En revanche, lorsqu'une sollicitation horizontale rapide se produit, le fluide des vérins se trouvant en compression est brutalement poussé vers l'accumulateur 9. La bille 11 est alors plaquée sur son siège ce qui oblige le fluide a passer au travers des diaphragmes 10. La perte de charge créée par l'étranglement du fluide est alors telle qu'il se produit un véritable blocage au prix d'une montée en pression dans le vérin.

Chaque vérin peut avoir par exemple une section utile de 275 cm² et être alimenté en fluide de travail, eau par exemple, sous une pression permanente de quelques bars. L'étranglement peut limiter la vitesse de compression du vérin à 5 mm par minute, cette vitesse variant peu avec la surpression intérieure.

Il convient d'éviter que la rupture d'une des tuyauteries constituant les conduits d'alimentation des vérins hydrauliques en fluide de travail crée un défaut « de mode commun » c'est-à-dire entraîne le non fonctionnement de l'ensemble des vérins.

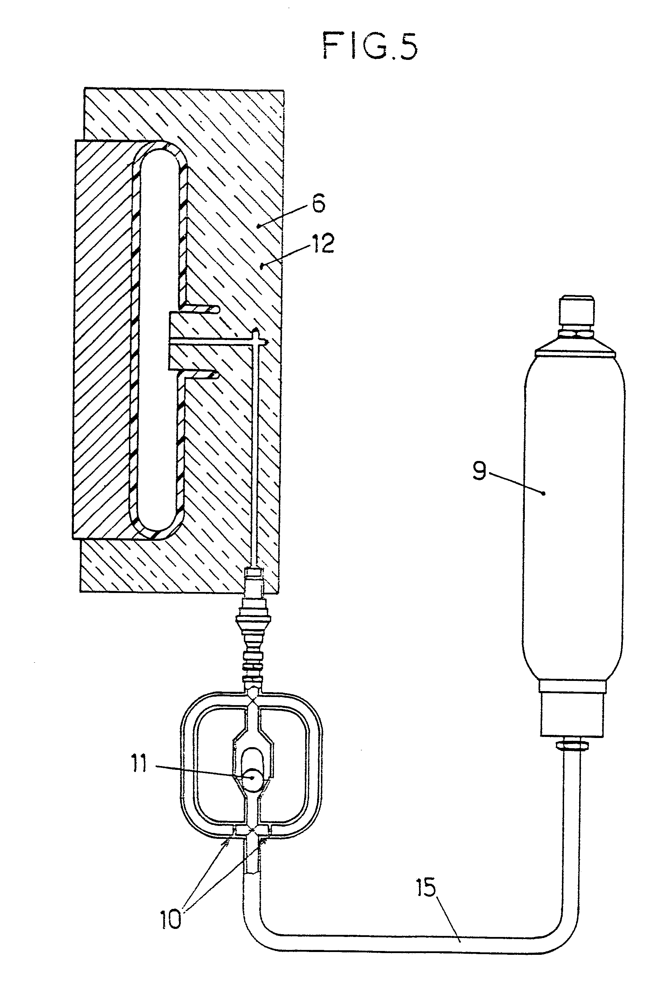

Si la rupture se produit entre un vérin et une valve unidirectionnelle, seul ce vérin perd instantanément toute action à court terme, mais l'ensemble des vérins connectés au même accumulateur perdra toute action au bout d'un certain temps, par exemple quelques minutes. C'est pourquoi contrairement à ce qui est représenté sur la figure 5 qui n'est qu'un schéma de principe, cette valve est intégrée dans le corps du vérin de manière à éviter tout risque de rupture dans cette zone.

Si la rupture se produit entre une valve unidirectionnelle et un accumulateur, les vérins reliés à cet accumulateur perdront leur possibilité de blocage après un premier blocage car après ce premier blocage ils ne pourront plus être alimenté à partir de l'accumulateur pour avancer à nouveau et suivre les déplacements de l'enceinte. C'est pourquoi il convient d'éviter qu'une telle rupture ne puisse affecter un trop grand nombre de vérins. On prévoit donc de nombreux accumulateurs. De préférence un même accumulateur alimente en fluide de travail plusieurs vérins 6 ou 12, ou groupes de vérins répartis régulièrement angulairement et constituant seulement un ensemble partiel de vérins de manière à éviter qu'une rupture de tuyauterie 15 puisse aboutir à la défaillance de plusieurs vérins ou groupes de vérins adjacents.

Dans l'exemple décrit on prévoit un accumulateur pour chaque ensemble de quatre groupes de quatre vérins, chaque groupe agissant sur un même bloc d'appui, les quatre groupes d'un ensemble correspondant à quatre blocs d'appui distribués à 90° autour de la chaudière. La résistance mécanique des divers éléments est choisie de manière à permettre de résister à un séisme en présence d'un défaut de fonctionnement d'un tel ensemble de quatre blocs d'appui quel qu'il soit. Par ailleurs les pressions de commande et des dispositifs d'alarme sont prévus pour remédier à toute chute de pression. Les accumulateurs reliés aux vérins externes sont différents de ceux qui sont reliés aux vérins internes, ces derniers accumulateurs seuls étant placés à l'intérieur de l'enceinte de confinement.

Quoique le premier local nucléaire qui vient d'être décrit permette une bonne résistance à certains séismes à condition que la structure bétonnée présente une très grande rigidité, il semble le plus souvent préférable, pour éviter un coût excessif de la structure bétonnée, tout en assurant la résistance à des séismes plus importants, d'utiliser des dispositions quelque peu différentes qui sont mises en œuvre dans un deuxième local nucléaire qui va être décrit à titre d'exemple. Ce deuxième local est généralement identique au premier sauf sur les points précisés ci-après. Certains de ces points sont de faible importance :

Le nombre des raidisseurs du plancher interne, ou celui des blocs d'appui internes 7 ou externes, est de 32.

Le plancher externe est constitué de béton armé et désigné par la référence 100. Il ne comporte pas de raidisseurs apparent, le ferraillage interne non représenté étant prévu pour supporter les efforts appliqués.

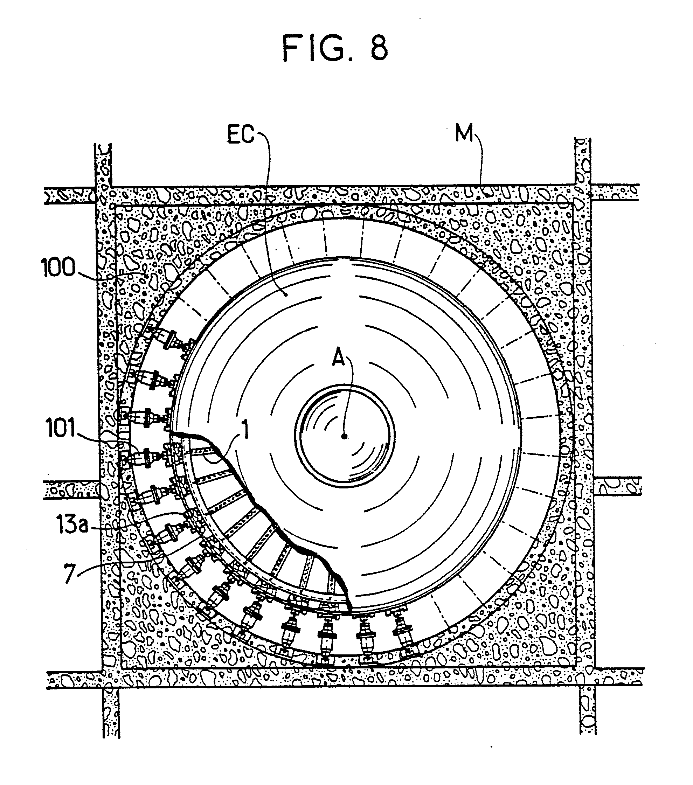

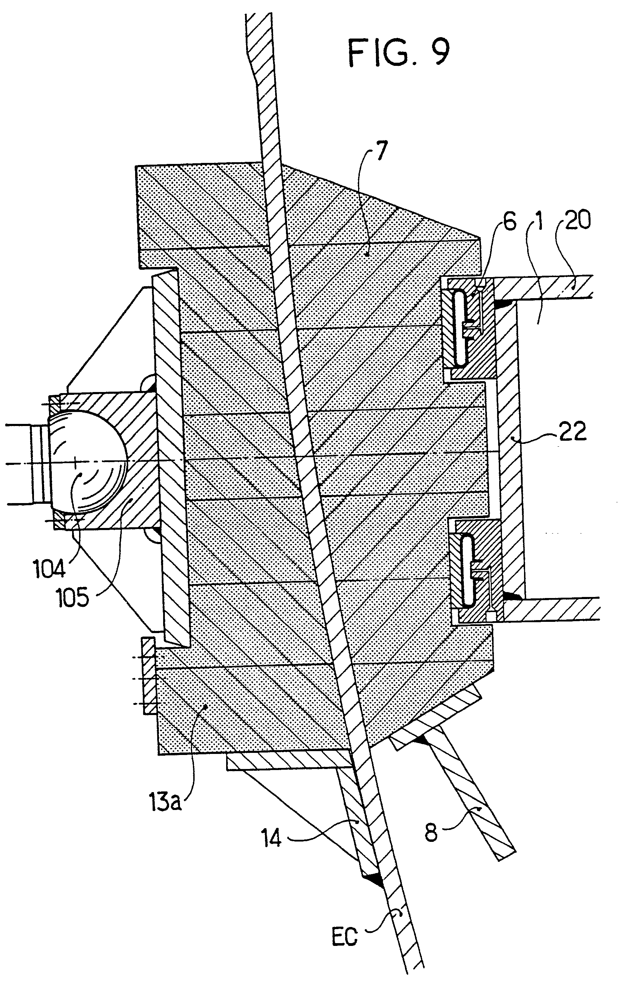

Les points de différence les plus importants concernent les vérins hydrauliques externes et la liaison entre la base de la chaudière et le radier R. Plus précisément, (voir figure 8), dans l'espace annulaire ménagé entre le plancher 100 et l'enceinte EC, dans le prolongement de chaque raidisseur 1, est installé un amortisseur hydraulique 101, s'appuyant d'un côté sur le plancher 100 par l'intermédiaire d'une pièce 102 et de l'autre sur une pièce d'appui 13a. Cette dernière est analogue à la pièce 7 et appliquée sur la portion de la surface extérieure de l'enceinte exactement en vis-à-vis de celle sur laquelle s'applique la pièce de bois 7. Elle repose sur un support métallique 14 (voir figure 9).

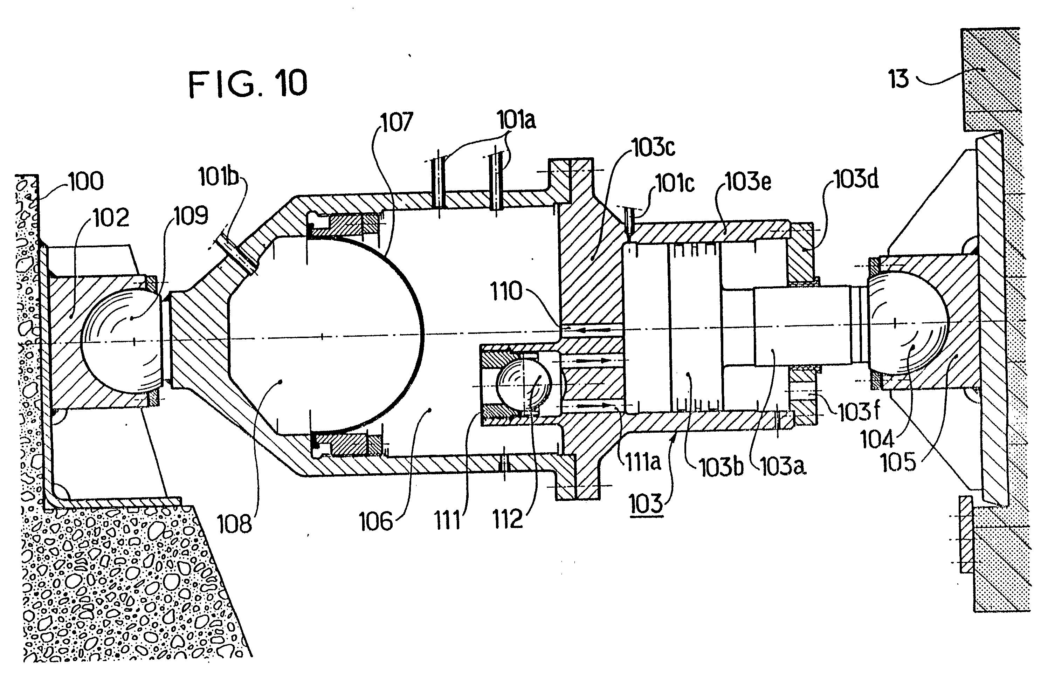

Conformément à la figure 10 chaque amortisseur hydraulique 101 s'étend radialement, est réalisé de manière compacte et comprend les éléments suivants :

un vérin 103 dont la tige 103a se termine par une rotule 104, disposée à l'extrémité interne de l'amortisseur et s'articule sur la pièce d'appui 13a par l'intermédiaire d'une pièce porte rotule 105. La paroi cylindrique latérale est référencée 103e. Le piston se déplace alternativement entre deux parois extrêmes circulaires 103c et 103d. La paroi 103d est percée d'un orifice 103f pour appliquer la pression atmosphérique à l'une des faces du piston.

une chambre de dissipation thermique 106 dont une paroi est constituée par une paroi extrême 103c du vérin 103, cette chambre comportant une membrane déformable 107 délimitant un volume interne d'azote 108 faisant office d'accumulateur de pression. La paroi de cette chambre est solidaire de celle du vérin 103. Elle se termine par une rotule 109 qui s'appuie sur le plancher 100 par l'intermédiaire de la pièce 102 et qui constitue l'extrémité externe de l'amortisseur. Les rotules 104 et 109 évitent d'appliquer des efforts de flexion aux vérins et à l'enceinte EC en cas de séisme.

un orifice de perte de charge calibré 110 percé dans la paroi extrême 103c pour faire communiquer entre eux le vérin 103 et la chambre 106. La section de cet orifice est par exemple de 10 cm².

une valve unidirectionnelle 111 à bille permettant le passage facile du fluide à travers des orifices calibrés 111a uniquement dans le sens chambre 106-vérin 103. La section total de ces orifices vaut au moins 2 fois celle de l'orifice de perte de charge et par exemple 7 fois.

des canalisations 101a, 101b et 101c permettant l'introduction des divers fluides et la mesure de leurs pressions.

On voit qu'un amortissement des oscillations de la chaudière est assuré en créant une perte de charge appropriée au travers d'un orifice.

L'absorption d'énergie correspondant à l'amortissement ainsi créé pose des problèmes nouveaux par rapport au premier local nucléaire. En effet, l'énergie absorbée se transforme en chaleur et il est nécessaire que chaque amortisseur possède un volume de fluide suffisant pour que la température atteinte à la fin du temps de fonctionnement prévu ne dépasse pas la valeur admissible, par exemple 120° C. De plus, la température doit être aussi homogène que possible au sein du fluide, qui est de l'eau, afin d'éviter des points chauds où pourraient se former des bulles de vapeur préjudiciables à l'effet amortisseur recherché. Il est donc indispensable qu'à la sortie de l'orifice de perte de charge, le jet puisse s'épanouir convenablement au sein du volume du fluide afin d'assurer un mélange homogène ainsi qu'une diminution suffisante de sa vitesse.

Le contact permanent entre les pièces de bois 7 et 13a et la paroi de l'enceinte de confinement EC est assuré grâce à une faible pression maintenue dans les vérins.

Les variations de pression à l'intérieur de l'enceinte d'une part et les dilatations thermiques différentielles des raidisseurs, de la paroi de l'enceinte EC et du plancher 100, engendrent des déplacements relatifs de ces différents éléments. Ces déplacements étant lents, la vitesse de transfert du fluide au travers des diaphragmes et des orifices crée une perte de charge trop faible pour s'opposer au mouvement.

Lorsqu'une sollicitation horizontale rapide se produit, le fluide des amortisseurs hydrauliques externes se trouvant en compression est brutalement poussé vers la chambre de dissipation. La bille 112 est alors plaquée sur son siège, ce qui oblige le fluide à passer au travers de l'orifice 110, la perte de charge ainsi créée limitant le déplacement des structures en béton par rapport à l'enceinte de confinement. Ce déplacement se fait sans basculement, par translation horizontale car la base BA peut glisser horizontalement sur le radier R comme il sera expliqué plus loin. Pendant ce temps, le fluide des vérins internes se trouvant en compression est également brutalement poussé vers l'accumulateur 9. La bille 11 est alors plaquée sur son siège, ce qui oblige le fluide à passer au travers des diaphragmes 10. La perte de charge créée par l'étranglement du fluide est alors telle qu'il se produit un véritable blocage permettant la transmission des efforts au plancher 20 sans déformation sensible de la paroi de l'enceinte de confinement.

A ce stade, les structures de béton se sont donc déplacées par rapport à l'enceinte de plusieurs centimètres par exemple.

Chaque vérin interne peut avoir par exemple une section utile de 275 cm² et être alimenté en fluide de travail, eau par exemple, sous une pression permanente de quelques bars. L'étranglement peut limiter la vitesse de compréhension du vérin à 5 mm par minute, cette vitesse variant peu avec la surpression intérieure.

Chaque amortisseur externe peut avoir par exemple une section utile de vérin de 1 300 cm²

avec une course totale de 120 mm et peut être alimenté en fluide de travail, eau par exemple, sous une pression permanente de quelques bars. L'orifice 110 peut créer une perte de charge maximale de 170 bars par exemple. Le volume d'eau de la chambre de dissipation thermique 106 peut être de 140 litres, et celui de l'azote peut varier entre 34 et 50 litres.

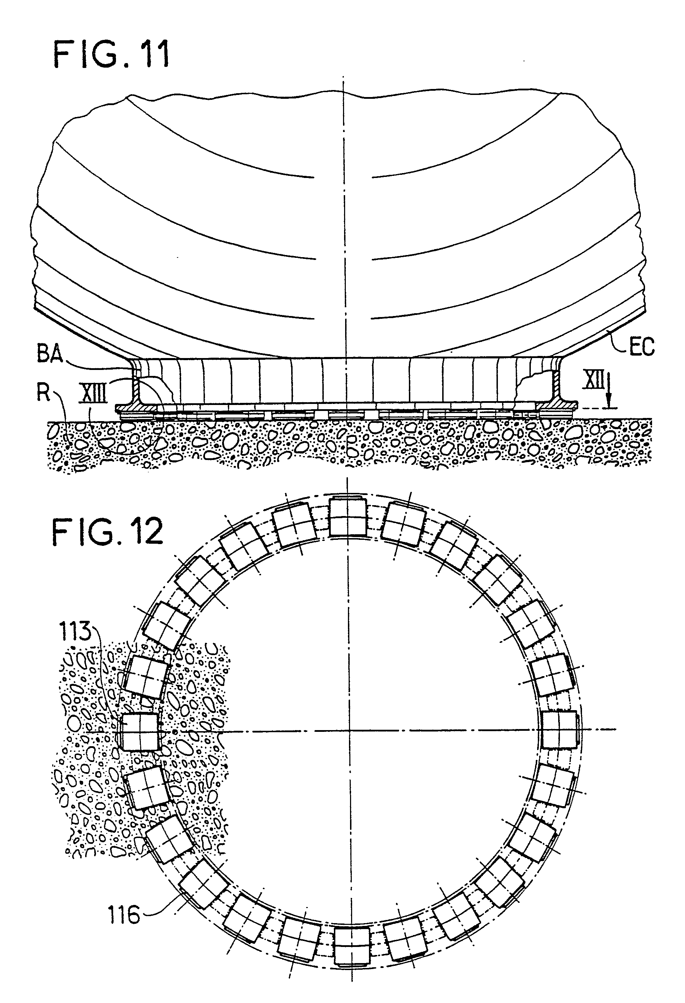

Conformément aux figures 11, 12 et 13 la base BA repose sur le radier en béton R par l'intermédiaire de patins 113, en matériau élastomère, régulièrement répartis sous cette base.

Ces patins sont encastrés sous la base de façon qu'ils ne puissent pas se déplacer par rapport à elle.

De plus, la rugosité de la face inférieure des patins d'une part, et de la zone d'appui de ces patins sur le radier d'autre part, est telle qu'il ne peut pas se produire de glissement entre les patins et le radier.

Ainsi, après cessation des secousses sismiques, la chaudière et l'enceinte de confinement sont automatiquement recentrées dans le local par des forces de rappel résultant à plus de 90 % de la déformation élastique des patins et, pour le reste, de la pression d'azote régnant dans les amortisseurs hydrauliques.

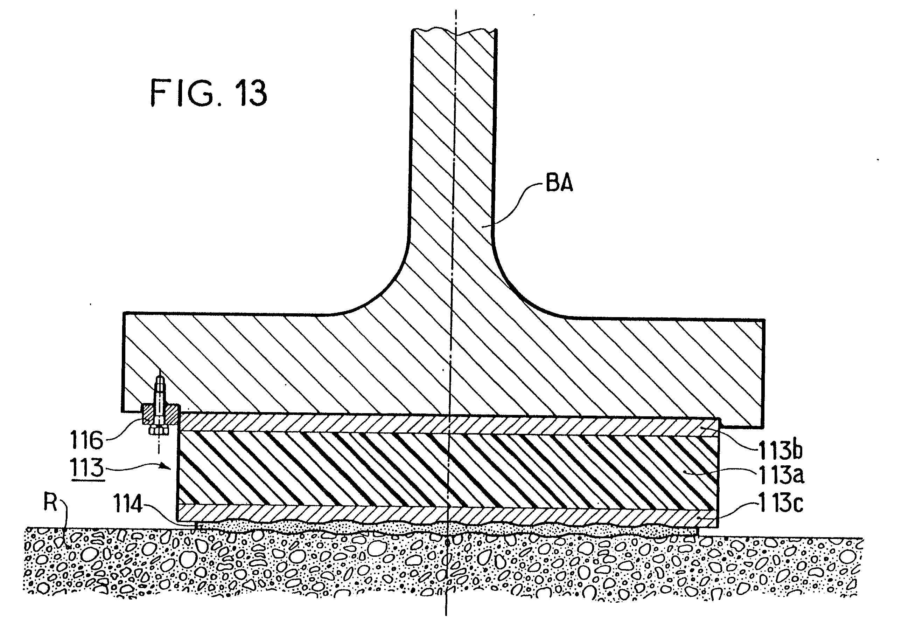

Plus précisément, (voir figure 13) chaque patin 113 se présente sous la forme d'un carré de 650 mm de côté et de 140 mm d'épaisseur, et est constitué d'un empilement de couches de néoprène et de métal, les couches extrêmes 113b et 113c étant métalliques, cette disposition donnant aux patins une grande raideur verticale. Les couches de néoprène ont une épaisseur comprise entre 10 et 20 mm environ et les couches métalliques entre 5 et 15 mm, environ. La plaque inférieure 113c est posée sur le radier R par l'intermédiaire d'une capacité métallique 114 dans laquelle du béton a été injecté de manière à ce qu'elle épouse parfaitement les ondulations du patin et du radier.

La plaque supérieure est glissée radialement de l'extérieur, avec l'ensemble du patin, dans un logement prévu dans la face inférieure de la semelle de la base BA. Chaque patin est bloqué dans ce logement par une clavette 116 disposée contre le bord radialement extérieur de la plaque supérieure 113b et visée dans la semelle BA.

## Revendications

1. Local nucléaire avec chaudière et enceinte de confinement résistant aux séismes, comportant

une structure bétonnée avec un radier (R) sensiblement horizontal prenant appui dans le sol et avec des murs latéraux (M) s'élevant sensiblement verticalement à partir de ce radier,

une enceinte de confinement métallique (EC) à parois minces et à axe vertical (A), cette enceinte étant disposée entre ces murs latéraux et posée sur ce radier par une base (BA) dont l'aire est inférieure à 25 % de la section maximale de l'enceinte par un plan horizontal,

une chaudière nucléaire comprenant un bloc de production de vapeur (BV) et des équipements auxiliaires (EA), contenue dans cette enceinte de confinement, s'appuyant sur le radier par l'intermédiaire de ladite base, et présentant un centre de gravité situé, à partir du radier, à une hauteur supérieure au diamètre de la base,

et des moyens de maintien pour limiter les oscillations de cette enceinte et de cette chaudière par rapport à la structure bétonnée, tout en permettant les dilatations éventuelles de l'enceinte et de la chaudière,

ce local étant caractérisé par le fait que ces moyens de maintien de l'enceinte et de la chaudière comportent :

un plancher métallique annulaire (20) inférieur à l'enceinte de confinement (EC), entourant le bloc de production de vapeur (BV) auquel il est fixé à distance de la base, et renforcé par des raidisseurs internes (1) s'étendant radialement et répartis angulairement autour de l'axe (A) de l'enceinte,

au moins un vérin hydraulique interne (6) agissant radialement entre d'une part l'extrémité extérieure de chacun de ces raidisseurs internes (1) et d'autre part la face interne de l'enceinte de confinement par l'intermédiaire d'un bloc d'appui interne (7),

au moins un vérin hydraulique externe (103) étant antagoniste du ou des vérins internes et agissant radialement entre d'une part lesdits murs latéraux et d'autre part la face externe de l'enceinte de confinement par l'intermédiaire d'un bloc d'appui externe (13a) en regard du bloc d'appui interne (7) du vérin antagoniste,

des accumulateurs de pression (108) pour appliquer de manière permanente à chacun de ces vérins (6, 103) une pression d'un fluide de travail tendant à le faire avancer pour l'appliquer contre la paroi de l'enceinte de confinement (EC),

et une valve unidirectionnelle avec dérivation (10, 11, 111) disposée entre ces accumulateurs de pression et chaque vérin et limitant le débit du fluide de travail seulement en sortie de ce vérin pour limiter la vitesse de recul du vérin lorsqu'une force de compression lui est appliquée pendant une phase d'un séisme tout en permettant à ce vérin pendant d'autres phases du séisme d'avancer sans résistance ni dissipation d'énergie sensible et à une vitesse suffisamment « rapide » pour qu'il reste en appui ininterrompu contre la paroi de l'enceinte de confinement quels que soient les déplacements de l'enceinte et de la chaudière et les déformations des planchers,

la valve unidirectionnelle (10, 11) de chaque vérin interne (6) limitant la vitesse de recul de ce vérin à une vitesse « lente » qui est suffisamment petite pour éviter toute dissipation sensible d'énergie dans ces vérins et tout déplacement relatif important de la chaudière (BV) par rapport à l'enceinte (EC) pendant un séisme, cette vitesse lente étant cependant supérieure à celle des déplacements relatifs lents résultant des dilatations et contractions de l'enceinte, de la chaudière et des planchers, de manière à permettre à ces déplacements lents de se faire librement.

2. Local selon la revendication 1, étant caractérisé en outre par le fait que la valve unidirectionnelle (111) de chaque vérin externe (103) limite la vitesse de recul de ce vérin à une vitesse « intermédiaire » entre lesdites vitesses lente et rapide, en opposant une résistance sensible à ce recul pendant un séisme et en transformant en chaleur l'énergie mécanique qui lui est fournie par les forces de compression qu'il subit, de manière à amortir les oscillations de la chaudière,

chaque vérin externe (103) comportant des moyens de dissipation thermique (106) propres à absorber la chaleur créée dans ce vérin pendant un séisme sans dépasser une température maximale admissible,

la base (BA) de la chaudière (BV) et de l'enceinte (EC) reposant sur le radier par l'intermédiaire de patins (113) permettant un déplacement horizontal reversible de cette base,

des moyens de rappel élastique (113) agissant sur cette base pour ramener la chaudière (BV) et l'enceinte (EC) à leur position initiale après un déplacement, sans exercer d'efforts importants sur l'enceinte.

3. Local selon la revendication 2, caractérisé par le fait que ladite vitesse lente est inférieure à $2.10^{-4}$ m/s, ladite vitesse intermédiaire étant comprise entre 100 fois la vitesse lente et 1,5 m/s.

4. Local selon la revendication 3, caractérisé par le fait que chaque vérin externe (103) est associé à un accumulateur de pression et à des moyens de dissipation thermique pour constituer un amortisseur intégré (101) s'étendant radialement entre deux extrémités et comportant

le vérin (103) avec un piston (103b) coulissant dans une paroi latérale (103e) en s'éloignant et se rapprochant d'une paroi extrême (103c) pour faire varier un volume de travail rempli d'un liquide de travail, ce piston étant solidaire d'une des extrémités de l'amortisseur, ces parois latérales et extrêmes étant solidaires de l'autre extrémité de l'amortisseur,

une chambre de dissipation thermique (106) communiquant par un orifice calibré de perte de charge (110) avec ce volume de travail et contenant un volume plus grand du liquide de travail, de manière à pouvoir absorber par échauffement de ce liquide la chaleur résultant de la dissipation de l'énergie mécanique des jets de ce liquide arrivant par cet orifice, sans dépasser ladite température maximale admissible prédéterminée,

l'accumulateur de pression à gaz (108) séparé du liquide de travail de la chambre de dissipation (106) par une membrane déformable (107) résistant à ladite température maximale admissible et permettant une variation du volume du gaz de cet accumulateur au moins égale à la variation du volume de travail du vérin (103),

et la valve unidirectionnelle (111) permettant au liquide de travail de passer facilement de la chambre de dissipation (106) dans le vérin (103) tout en l'obligeant à ne passer de ce vérin dans cette chambre qu'à travers l'orifice de perte de charge, de manière à freiner les déplacements de la chaudière et de l'enceinte tendant à raccourcir l'amortisseur, tout en permettant des déplacements rapides tendant à allonger l'amortisseur.

5. Local selon la revendication 4, caractérisé par le fait que chaque amortisseur externe (101) est muni de moyens d'articulation (104, 109) à ses deux extrémités pour éviter d'appliquer des efforts de flexion à l'enceinte de confinement (EC).

6. Local selon la revendication 2, caractérisé par le fait que les patins (113) supportant la base (BA) de l'enceinte (EC) et de la chaudière (BV, EA) sont faits d'un matériau élastique et sont encastrés d'une part dans cette base et d'autre part dans ledit radier (R) pour constituer lesdits moyens de rappel.

7. Local selon la revendication 1, caractérisé par le fait qu'un même accumulateur de pression alimente en fluide de travail plusieurs vérins internes (6) ou groupes de vérins répartis régulièrement angulairement et constituant seulement un ensemble partiel de vérins de manière à éviter qu'une rupture de tuyauterie (15) puisse aboutir à la défaillance de plusieurs vérins ou groupes de vérins adjacents.

8. Local selon la revendication 1, caractérisé par le fait que les blocs d'appui internes (7) présentent, au moins sur leurs faces au contact de la paroi de l'enceinte de confinement (EC), une dureté inférieure à celle du métal de cette paroi, de manière à éviter d'une part le risque de marquage de cette paroi en cas d'effort d'appui important, et d'autre part le risque de raclage de cette paroi en cas de glissement relatif du bloc d'appui sur cette paroi, selon la direction de déplacement.

9. Local selon la revendication 1, caractérisé par le fait que la structure bétonnée (R, M, D) délimite non seulement ledit local nucléaire mais aussi d'autres locaux dont un plancher ou plafond est constitué par une dalle horizontale (D) se raccordant extérieurement auxdits murs latéraux (M) sensiblement à la hauteur desdits amortisseurs externes (101), de manière à aider à supporter les efforts horizontaux appliqués à ces murs latéraux par ces amortisseurs, cette structure bétonnée comportant en outre des parois (T) constituant une protection de l'enceinte de confinement (EC) contre les impacts d'origine externe.

10. Local selon la revendication 1, caractérisé par le fait que les vérins externes (103) prennent appui sur les murs latéraux (M) par l'intermédiaire ou au voisinage d'un plancher horizontal rigide (100) externe à l'enceinte de confinement (EC) et compris entre ces murs.

**Claims**

1. A nuclear hall having a boiler and a confinement chamber capable of withstanding earthquakes, comprising

a concrete structure with a substantially horizontal ground-supported raft (R), and with side walls (M) standing substantially vertically on said raft ;

a thin walled metal confinement chamber (EC) having a vertical axis (A), said chamber being placed in between said side walls and resting on said raft via a base (BA) having a surface area that is smaller than 25 % of the maximum section area of said chamber in a horizontal plane,

a nuclear boiler comprising a steam generation block (BV) and auxiliairy equipments (EA) housed inside said confinement chamber, resting on the raft by means of said base and having a center of gravity which is at a greater distance above the raft than the diameter of the base,

and hold means for limiting the oscillations of this chamber and this boiler relative to the concrete structure, while still permitting possible thermal expansions and contractions of the chamber and the boiler, characterized in that these hold means for maintaining the chamber and the boiler comprise :

an annular metal floor (20) inside the confinement chamber (EC) surrounding the steam generation block (BV) and fixed thereto remote from the base, and reinforced by internal radially-extending stiffeners (1) which are evenly distributed around the axis (A) of the confinement chamber,

at least on internal hydraulic jack (6) acting radially between on the one hand the outer end of each said internal stiffeners (1) and on the other hand the inside surface of the confinement chamber, via an internal thrust block (7),

at leat one external hydraulic jack (103) being in opposition to said internal jack(s) and acting radially between on the one hand said side walls and on the other hand the outside surface of the confinement chamber via an external thrust block (13a) facing the internal thrust block (7) of the opposite jack,

pressure accumulators (108) for permanently applying a work fluid pressure to each of said jacks (6, 103), tending to cause them to press against the wall of said confinement chamber (EC),

and a non-return valve with derivation (10, 11, 111) disposed between these pressure accumulators and each jack and limiting the flow of working fluid only at the output of this jack for limiting the moving back speed on the jack when a compression force is applied thereto during some phase of an earthquake, while allowing the jack to advance substantially without resistance or energy dissipation during other phases of an earthquake, « fast » enough to remain permanently pressed against the confinement chamber wall, regardless of the motions of the chamber and the boiler and the deformation of the floors, the non-return valve (10, 11) of each internal jack (6) limiting the moving-back speed of this jack to a « slow » speed which is slow enough to avoid any substantial energy dissipation in these jacks and any large displacement of the boiler (BV) relative to the chamber (EC) during an earthquake, said slow speed being nevertheless greater than the speed of relative motions caused by differential expansions and contractions of the chamber, the boiler and the floors, whereby such displacements can take place unhindered.

2. A hall according to claim 1, further characterized in that the non-return valve (111) of each external jack (103) limits the moving-back speed of this jack to an « intermediate » speed lying between said slow and said fast speeds, by opposing a resistance to this backwards movement during an earthquake and by transforming into heat the mechanical energy supplied to it by the compression forces applied to it, thereby damping the oscillations of the boiler,

each external jack (103) comprising heat dissipating means (106) suitable for absorbing said heat generated in this jack during an earthquake without exceeding a maximum allowed temperature,

the base (BA) of the boiler (BV) and of the chamber (EC) standing on the raft via skates (113) for enabling the base to move horizontally in a reversible manner,

resilient return means (113) acting on said base to return the boiler (BV) and the chamber (EC) to their initial position after a movement and without exerting large forces on the chamber.

3. A hall according to claim 2, characterized in that said slow speed is less than $2.10^{-4}$ m/s, said intermediate speed lying between 100 times the slow speed and 1.5 m/s.

4. A hall according to claim 3, characterized in that each external jack (103) is associated to a pressure accumulator and to heat dissipation means, thereby constituting an integrated damper (101) disposed radially between two ends and comprising :

the jack (103) having a piston (103b) slidably mounted in a side wall (103e) to move towards and away from an end wall (103c) thereby varying a working volume which is filled with a working liquid, said piston being connected to one end of the damper, and said side walls and end walls being connected to the other end of the damper,

a heat dissipation chamber (106) communicating via a calibrated head loss orifice (110) with this working volume, and containing a greater volume of working limit, such that the heat resulting from dissipation of the mechanical energy in the form of jets of liquid passing through said calibrated orifice can be adsorbed in the working liquid without exceeding said predetermined maximum allowed temperature,

the gas pressure accumulator (108) being separated from the working liquid in the dissipation chamber (106) by a flexible membrane (107) which is capable of standing up to said predetermined maximum allowed temperature, and capable of changing the gas volume of said accumulator by an amount at least equal to the variation in the working volume of the jack (103)

and the non-return valve (111) enabling the working liquid to pass easily from the dissipation chamber (106) into the jack (103), while causing the liquid to return to the dissipation chamber via the head loss orifice, thereby braking any motion of the boiler and of the chamber having a tendency to shorten the damper, while allowing rapid motions having a tendency to lengthen the damper.

5. A hall according to claim 4, characterized in that each external damper (101) is provided with articulation means (104, 109) at its two ends to avoid applying bending forces to the confinement chamber (EC).

6. A hall according to claim 2, characterized in that the skates (113) supporting the base (BA) of the confinement chamber (EC) and the boiler (BV, EA) are made of resilient material and are built-in both to the base and to the raft (R), thereby constituting said return means.

7. A hall according to claim 1, characterized in that a common accumulator feeds with working fluid a plurality of internal jacks (6) or groups of jacks regularly spaced out and constituting only a partial assembly of jacks in order to avoid that a bursting pipe (15) should cause several jacks of groups of adjacent jacks to fail.

8. A hall according to claim 1, characterized in that each internal thrust block (7), at least on its face which is in contact with the wall of the confinement chamber (EC) is not as hard as the metal of that wall, thereby avoiding both the risk of marking this wall when transmitting large forces, and avoiding the risk of grazing the wall in the event of the block slipping, according to the direction of motion.

9. A hall according to claim 1, characterized in that the concrete structure (R, M, D) includes not only said nuclear hall, but also other halls which are arranged to have floors or ceilings constituted by respective horizontal slabs (D) connected to the outside faces of said side walls (M) substantially on a level with said external dampers (101) to enable said side walls to withstand the horizontal forces applied thereto by said dampers, said concrete structure further including walls (T) constituting a protection of the confinement chamber (EC) against impacts of external origin.

10. A hall according to claim 1, characterized in that the external jacks (103) bear against the side walls (M) via or in the neighbourhood of a rigid horizontal floor (100) outside of the confinement chamber (EC) and included between said walls.

**Patentansprüche**

1. Kernkraftwerkgehäuse mit Reaktor und erdbebenfestem Sicherheitsbehälter, mit

einer betonierten Struktur bestehend aus einer im wesentlichen waagerechten Grundplatte (R), die sich auf dem Boden abstützt, und mit Seitenwänden (M), die sich im wesentlichen senkrecht auf diesem Boden erheben,

einem metallischen Sicherheitsbehälter (EC) aus dünnen Wänden und mit senkrechter Achse (A), wobei dieser Behälter zwischen diesen Seitenwänden angeordnet und auf dieser Grundplatte durch eine Basis (BA) abgestützt ist, deren Fläche kleiner als 25 % der maximalen Querschnittsfläche des Behälters in einer waagerechten Ebene ist,

einem Kernreaktor, der einen Dampferzeugerblock (BV) und Hilfsausrüstungen (EA) aufweist und in diesem Sicherheitsbehälter enthalten ist, sich über die genannte Basis auf der Grundplatte abstützt und einen Schwerpunkt aufweist, der sich ausgehend von der Grundplatte in einer Höhe befindet, die größer ist als der Durchmesser der Basis,

und mit Haltemitteln, um die Schwingungen dieses Behälters und dieses Reaktors in bezug auf die betonierte Struktur zu begrenzen und gelichzeitig die eventuellen Dehnungen des Behälters und des Reaktors zu erlauben,

wobei dieses Gehäuse dadurch gekennzeichnet ist, daß diese Haltemittel für den Behälter und den Reaktor aufweisen

einen ringförmigen metallischen Fußboden (20) innerhalb des Sicherheitsbehälters (EC), der den Dampferzeugerblock (BV) umgibt, an den er im Abstand von der Basis befestigt ist, und verstärkt durch innere Versteifer (1), die sich radial erstrecken und winkelmäßig um die Achse (A) des Behälters verteilt sind,

mindestens einem inneren Hydraulikstempel (6), der radial zwischen einerseits dem äußeren Ende jedes dieser inneren Versteifer (1) und andererseits der Innenseite des Sicherheitsbehälters über einen inneren Stützblock (7) einwirkt,

mindestens einem äußeren Hydraulikstempel (103), der dem oder den inneren Stempel(n) entgegewirkt und radial zwischen einerseits den Seitenmauern und andererseits der Außenseite des Sicherheitsbehälters über einen äußeren Stützblock (13a) gegenüber dem inneren Stützblock (7) des Gegenstempels wirkt,

Druckakkumulatoren (108), um in permanenter Weise auf jeden dieser Stempel (6, 103) einen Druck eines Arbeitsfluids auszuüben, der ihn vorwärtsschiebt, um ihn gegen die Wand des Sicherheitsbehälters (EC) zu drücken,

und einem Einweg-Ventil mit Abzweigung (10, 11, 111), das zwischen diesen Druckakkumulatoren und jedem Stempel angeordnet ist und den Arbeitsfluid-Durchsatz nur am Ausgang dieses Stempels begrenzt, um die Rückzugsgeschwindigkeit des Stempels zu begrenzen, wenn während einer Erdbebenphase eine Kompressionskraft auf ihn ausgeübt wird, während es gleichzeitig diesem Stempel während anderer Phasen des Erdbebens erlaubt, sich ohne wesentlichen Widerstand oder Energieverlust und mit einer Geschwindigkeit vorwärtszuschieben, die « schnell » genug ist, damit er in ununterbrochenem Aufliegen auf der Wand des Sicherheitsbehälters verbleibt, ganz gleich, wie groß die Verschiebungen des Behälters und des Reaktors und die Verformungen der Fußböden sind,

wobei das Einweg-Ventil (10, 11) jedes inneren Stempels die Rückzugsgeschwindigkeit dieses Stempels auf eine « langsame » Geschwindigkeit begrenzt, die niedrig genug ist, um jeden wesentlichen Energieverlust in diesen Stempeln und jede starke Relativverschiebung des Reaktors (BV) in bezug auf den Behälter (EC) während eines Erdbebens zu begrenzen, wobei diese langsame Geschwindigkeit jedoch höher ist als die der langsamen Relativverschiebungen, die aus den Ausweitungen und Zusammenziehungen des Behälters, des Reaktors und der Fußböden entstehen, um es diesen langsamen Verschiebungen zu ermöglichen, frei abzulaufen.

2. Gehäuse nach Anspruch 1, dadurch gekennzeichnet, daß außerdem das Einweg-Ventil (111) jedes äußeren Stempels (103) die Rückzugsgeschwindigkeit dieses Zylinders auf eine Geschwindigkeit « zwischen » diesen beiden Geschwindigkeiten, der langsamen und der schnellen, begrenzt, indem es während eines Erbebens diesem Rückzug einen wesentlichen Widerstand entgegensetzt und die ihm von den Kompressionskräften, denen es unterworfen ist, gelieferte mechanische Energie im Wärme umwandelt, um die Schwingungen des Reaktors zu dämpfen,

daß jeder äußere Stempel (103) Mittel zur Wärmeableitung (106) aufweist, die die in diesem Stempel während eines Erdbebens entstandene Wärme absorbieren, ohne eine zulässige Höchsttemperatur zu überschreiten,

daß die Basis des Reaktors (BV) und des Behälters (EC) auf der Grundplatte über Kufen (113) ruht, welche eine reversible waagerechte Verschiebung dieser Basis ermöglichen,

und daß elastische Rückholmittel (113) auf diese Basis einwirken, um den Reaktor (BV) und den Behälter (EC) nach einer Verschiebung in ihre Ursprungsstellung zurückzuholen, ohne starke Kräfte auf den Behälter auszuüben.

3. Gehäuse nach Anspruch 2, dadurch gekennzeichnet, daß die genannte langsame Geschwindigkeit unter $2.10^{-4}$ m/s liegt, während die Zwischengeschwindigkeit zwischen 100 mal der langsamen Geschwindigkeit und 1,5 m/s liegt.

4. Gehäuse nach Anspruch 3, dadurch gekennzeichnet, daß jeder äußere Stempel (103) mit einem Druckakkumulator und mit Wärmeableitmitteln verbunden ist, um eiunen integrierten Stoßdämpfer (101) zu bilden, der sich radial zwischen zwei Enden erstreckt und aufweist

den Stempel (103) mit einem Kolben (103b), der in einer Seitenwand (103e) gleitet und sich von einer Endwand (103c) entfernt und ihr wieder nähert, um ein mit einer Arbeitsflüssigkeit gefülltes Arbeitsvolumen variieren zu lassen, wobei dieser Kolben fest mit einem der Enden des Stoßdämpfers verbunden ist, während diese Seiten- und Endwände fest mit dem anderen Ende des Stoßdämpfers verbunden sind,

eine Wärmeableitungskammer (106), die über eine kalibrierte Druckreduzieröffnung (110) mit diesem Arbeitsvolumen verbunden ist und ein größeres Volumen an Arbeitsflüssigkeit aufweist, um durch Erhitzen dieser Flüssigkeit die aus der Umwandlung der mechanischen Energie der durch diese Öffnung ankommenden Flüssigkeitsstrahlen erzeugte Wärme zu absorbieren, ohne die vorbestimmte höchstzulässige Temperatur zu überschreiten,

den Gasdruckakkumulator (108), der von der Arbeitsflüssigkeit der Ableitungskammer (106) durch eine verformbare Membran (107) getrennt ist, die der zulässigen Höchsttemperatur widersteht und eine Variation des Gasvolumens dieses Akkumulators erlaubt, die mindestens gleich der Variation des Arbeitsvolumens des Stempels (103) ist,

und das Einweg-Ventil (111), das es der Arbeitsflüssigkeit erlaubt, leicht von der Ableitungskammer (106) in den Stempel (103) überzutreten, sie aber gleichzeitig zwingt, von diesem Stempel in diese Kammer nur durch die Druckreduzieröffnung überzutreten, so daß die Verschiebungen des Reaktors und des Behälters gebremst werden, die den Stoßdämpfer verkürzen, und gleichzeitig schnelle Verschiebungen erlauben, die den Stoßdämpfer verlängern.

5. Gehäuse nach Anspruch 4, dadurch gekennzeichnet, daß jeder äußere Stoßdämpfer (101) an seinen beiden Enden mit Gelenkmitteln (104, 109) ausgestattet ist, um zu vermeiden, daß Biegekräfte auf den Sicherheitsbehälter (EC) ausgeübt werden.

6. Gehäuse nach Anspruch 2, dadurch gekennzeichnet, daß die die Basis (BA) des Behälters (EC) und des Reaktors (BV, EA) tragenden Kufen (113) aus einem elastischen Material sind und einerseits in diese Basis und andererseits in die Grundplatte (R) eingelassen sind, um die Rückholmittel zu bilden.

7. Gehäuse nach Anspruch 1, dadurch gekennzeichnet, daß ein gemeinsamer Druckakkumulator mehrere innere Stempel oder gleichmäßig winkelmäßig verteilte Gruppen von Stempeln, die nur eine Teileinheit von Zylindern bilden, mit Arbeitsflüssigkeit speist, um zu vermeiden, daß ein Bruch eines Rohrs (15) den Ausfall mehrerer Stempel oder Gruppen von benachbarten Stempeln bewirkt.

8. Gehäuse nach Anspruch 1, dadurch gekennzeichnet, daß die inneren Stützblöcke (7) mindestens auf ihren Seiten, die mit der Wand des Sicherheitsbehälters (EC) in Kontakt stehen, eine Härte aufweisen, die geringer ist als die des Metalls dieser Wand, so daß einerseits die Gefahr der Beschädigung dieser Wand im Fall einer starken Aufstützkraft, und andererseits die Gefahr des Verkratzens dieser Wand im Fall eines relativen Gleitens des Stützblocks auf dieser Wand gemäß der Verschieberichtung vermieden werden.

9. Gehäuse nach Anspruch 1, dadurch gekennzeichnet, daß die betonierte Struktur (R, M, D) nicht nur das Kernkraftwerksgehäuse, sondern auch andere Räume umschließt, von denen ein Fußboden oder eine Decke von einer waagerechten Platte (D) gebildet wird, die sich außen an die Seitenwände (M) im wesentlichen in Höhe der äußeren Stoßdämpfer (101) anschließt, um mitzuhelfen, die von diesen Stoßdämpfern auf diese Seitenwände ausgeübten waagerechten Kräfte auszuhalten, wobei diese betonierte Struktur außerdem Wände (T) aufweist, die einen Schutz des Sicherheitsbehälters (EC) gegen einen Stoß von außen bilden.

10. Gehäuse nach Anspruch 1, dadurch gekennzeichnet, daß die äußeren Stempel (103) sich auf den Seitenmauern (M) über einen starren waagerechten Boden (100) oder in der Nähe eines solchen Bodens außerhalb des Sicherheitsbehälters (EC) und von diesem Mauern umgeben abstützen.

FIG.1

L2

B

D

EC

EA

BV

A

EA

M

T

BA

L1

D

R

# FIG.2

# FIG.3

# FIG.4

# FIG.5

FIG. 6

# FIG. 7

# FIG. 8

# FIG. 9

FIG. 10

0 079 048

# FIG. 11

BA

EC

R

XIII

XIII

# FIG. 12

113

116

FIG. 13

0 079 048